# FASCICULE DE BREVET EUROPEEN

(11) **EP 1 016 036 B1**
(45) Date de publication et mention de la délivrance du brevet: **26.02.2003**
(21) Numéro de dépôt: 97951300.9
(22) Date de dépôt: 10.12.1997
(51) Int. Cl.: G06K 19/077

(54) **PROCEDE DE REALISATION D'UNE CARTE A MEMOIRE ELECTRONIQUE SANS CONTACT**
VERFAHREN ZUM HERSTELLEN EINER KONTAKTLOSEN ELEKTRONISCHEN SPEICHERKARTE
METHOD FOR PRODUCING A CONTACTLESS ELECTRONIC CHIP CARD

(30) Priorité: 11.12.1996 FR 9615192
(43) Date de publication de la demande: 05.07.2000
(73) Titulaire: SCHLUMBERGER Systèmes, 92120 Montrouge (FR)
(72) Inventeur: CATTE, Etienne, F-78560 Port Marly (FR)
(86) Numéro de dépôt international: FR9702261
(87) Numéro de publication internationale: WO98026372

(56) Documents cités:
- EP-A- 0 690 490
- EP-A- 0 706 152
- EP-A- 0 737 935
- WO-A-95/35207
- WO-A-96/07985

## Description

La présente invention concerne un procédé de réalisation d'une carte à mémoire apte à échanger, sans contact électrique, des informations sur un dispositif de lecture.

L'invention trouve une application particulièrement avantageuse dans le domaine de la fabrication des cartes sans contact, notamment celles utilisées comme titres de transport ou comme badges d'accès à des locaux protégés.

L'échange d'informations entre une carte sans contact et le dispositif de lecture auquel elle est associée s'effectue, de manière très générale, par couplage électromagnétique à distance entre une première antenne logée dans le corps de la carte sans contact et une deuxième antenne située dans ledit dispositif de lecture. La carte est munie, par ailleurs, d'une pastille semi-conductrice, ou puce, connectée à ladite première antenne et contenant, entre autres, une mémoire dans laquelle sont stockées les informations à fournir au dispositif de lecture, ainsi que des moyens, un microprocesseur par exemple, prévus pour élaborer les informations à émettre et traiter les informations reçues.

Les cartes sans contact existant actuellement sont constituées d'un circuit électronique se présentant sous la forme d'un insert qui, le plus souvent, est noyé dans un corps de carte en matériau plastique. Cet insert comprend l'antenne de couplage de la carte, la pastille semi-conductrice et un circuit d'interconnexion entre l'antenne et la pastille. La pastille semi-conductrice est généralement montée sur ledit circuit d'interconnexion selon la technique de liaison filaire ("wire bonding" en anglo-saxon) qui consiste à relier au moyen de fils d'or par exemple, les métallisations d'entrée/sortie de la pastille semi-conductrice à des plages de contact déposées sur le circuit d'interconnexion et sur lesquelles sont raccordées les bornes de connexion électrique de l'antenne de couplage. De manière à protéger la pastille semi-conductrice et les fils de liaison, l'ensemble est surmoulé d'une résine isolante. La pastille semi-conductrice ainsi montée sur le circuit d'interconnexion est appelée "module électronique".

L'antenne elle-même est réalisée soit à partir d'un fil émaillé bobiné et connecté aux plages de contact du circuit d'interconnexion, soit à l'aide d'un circuit imprimé ou gravé, relié au circuit d'interconnexion.

Ces techniques connues de réalisation de cartes sans contact mettant en oeuvre un module électronique présentent un certain nombre d'inconvénients.
― Elles nécessitent la réalisation préalable du module électronique.
― Les modules sont épais du fait des boucles formées par les fils de liaison. De plus, cette épaisseur est encore augmentée par le surmoulage de protection dont la réalisation représente par ailleurs une opération très onéreuse.
― En raison de l'épaisseur totale de la pastille semi-conductrice connectée et protégée, il est difficile, surtout si l'on veut garantir un bon état de la surface de la carte, de monter le module électronique directement sur le circuit, imprimé ou gravé, portant l'antenne de couplage et de respecter l'épaisseur de la carte au standard ISO (760 µm). Ce dernier point est d'autant plus critique que la plastification rend nécessaire de mettre l'antenne proche du milieu de la carte et de garder des structures symétriques pour éviter que la carte ne se galbe. Pour cette raison, le module est monté traversant le circuit d'antenne de façon à équilibrer les volumes de matériau plastique de chaque côté de l'antenne, ce qui impose une opération supplémentaire de perçage du circuit imprimé ou gravé.
― L'insert à antenne bobinée est très difficile à plastifier en garantissant une bonne planéité de la surface, et ne peut être réalisé qu'unité par unité.
― Pour les deux types d'insert, les dimensions du module selon le plan de la carte sont très importantes, induisant généralement des défauts de planéité de la carte finie à l'aplomb du module sur des surfaces également importantes.

Une demande de brevet européen publiée sous le numéro EP-A3-0 706 152 décrit un procédé de fabrication d'une carte à puce selon lequel on reporte, en utilisant la technique du flip-chip, une puce sur des pistes conductrices par exemple imprimées à la surface d'un film thermoplastique. Dans ce procédé, chacun des feuillets intermédaires, destinés à venir se superposer à la surface du film thermoplastique portant les pistes conductrices, montre une découpe formant une cavité dans laquelle est logée la puce lors d'une étape de colaminage.

Toutefois, dans un tel procédé, la cavité définie par les feuillets doit être exactement ajustée aux dimensions de la puce. Autrement dit, les découpes ménagées dans le ou les feuillets intermédiaires doivent se superposer exactement et les bords réguliers de la cavité ainsi formée doivent être disposés le plus proche possible des bords de la puce. Dans le cas contraire, des différences de températures voire un fluage de matière pourrait occasionner des déformations à la surface de la carte, lesdites déformations se traduisant en général par une altération des motifs imprimés de ladite surface.

On notera par ailleurs que l'injection d'une résine autour de la puce, qui pourrait permettre de combler l'espace entre la puce et les bords de la cavité, n'est pas possible avec simplicité compte tenu du faible volume dudit espace en liaison avec le volume de ladite puce, bien inférieur à celui d'un micromodule. De plus, une telle injection aurait pour conséquence de grever les coûts de fabrication des cartes.

Aussi, un problème technique à résoudre par l'objet de la présente invention est de proposer un procédé de réalisation d'une carte à mémoire électronique apte à échanger, sans contact électrique, des informations avec un dispositif de lecture, ladite carte à mémoire électronique comportant une antenne de couplage avec ledit dispositif de lecture et une pastille semi-conductrice connectée à ladite antenne, procédé qui permettrait de remédier aux inconvénients constatés avec les inserts connus de l'état de la technique, concernant notamment les dimensions hors-tout de la pastille semi-conductrice et l'opération de connexion de ladite pastille à l'antenne de couplage, procédé qui permettrait par ailleurs d'éviter les problèmes liés aux découpes formées dans le ou les feuillets intermédaires.

La demande de brevet européen publiée sous le numéro 0 737 935 décrit un procédé de réalisation d'une carte à mémoire sans contact. Selon ce procédé une résine uréthane est déposée sur la surface d'un substrat qui comporte une puce. Le substrat muni de celles-ci est maintenu entre deux films de polyester suivi par une compression à 70°C et à 3kg/mm².

Selon l'invention, le problème technique posé est résolu du fait que ledit procédé comprend les étapes définies dans la revendication 1.

En outre, ce procédé de réalisation présente l'avantage d'éviter l'aménagement d'une ouverture à travers ladite feuille intermédiaire, la Demanderesse ayant pu établir que, du fait de son faible volume, la pastille semi-conductrice ne produisait pas, après laminage, de surépaisseur notable à la surface de la feuille externe, à l'aplomb de la pastille.

Il faut également souligner que le procédé de réalisation d'une carte électronique sans contact, conforme à l'invention, peut s'appliquer quelle que soit la technique de production envisagée : carte à carte, en planches ou en bandes continues, les feuilles pouvant avoir des dimensions quelconques.

La description qui va suivre en regard des dessins annexés, donnés à titre d'exemples non limitatifs, fera bien comprendre en quoi consiste l'invention et comment elle peut être réalisée.

La figure 1 est une vue de côté d'une feuille-support sur laquelle est connectée une pastille semi-conductrice conformément au procédé selon l'invention.

La figure 2 est une vue de dessus montrant un mode de connexion "à cheval" d'une pastille semi-conductrice sur une antenne de couplage.

La figure 3 est une vue de côté d'un mode de réalisation d'une carte sans contact selon l'invention.

La figure 4 est une vue de côté d'un mode de réalisation d'une carte sans contact selon l'invention.

La figure 5 est une vue montrant, en perspective, un mode de réalisation d'une carte sans contact selon l'invention.

Les figures 6, 7 et 8 montrent en vue de côté, des cartes sans contact réalisés selon différents modes de mise en oeuvre de procédés selon l'invention.

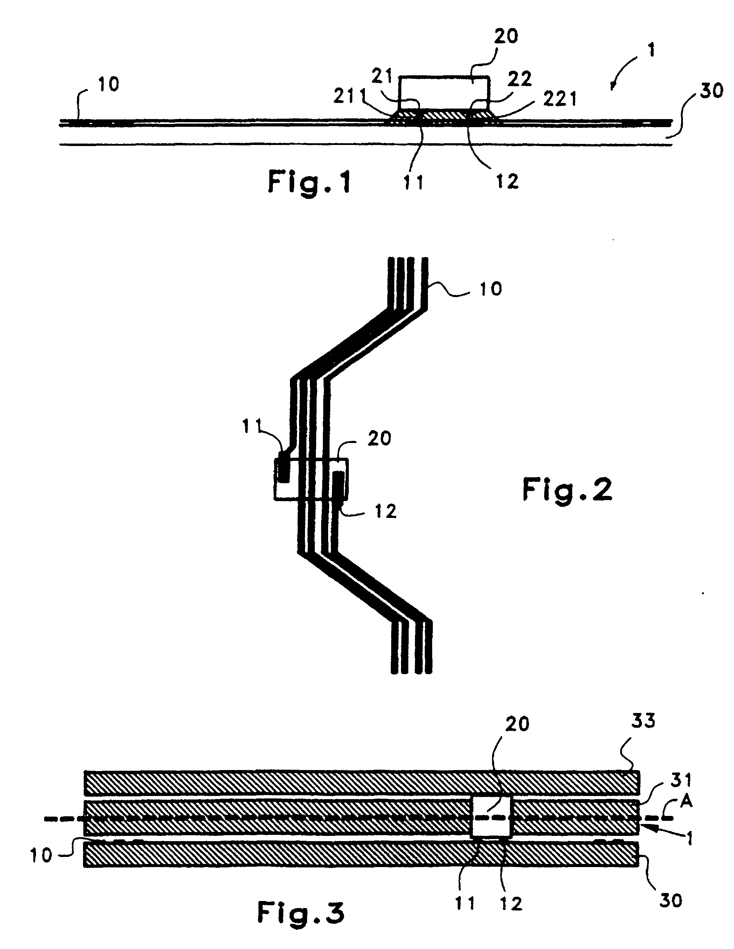

Sur la vue de côté de la figure 3 sont représentés les divers constituants d'une carte sans contact réalisée le procédé objet de l'invention. Ladite carte sans contact est destinée à échanger des informations, sans contact électrique, avec un dispositif de lecture non représenté. A cet effet, la carte comprend un circuit électronique 1 comportant une antenne de 10 de couplage avec ledit dispositif de lecture, réalisée, ainsi que des bornes 11, 12 de connexion électrique, sur une feuille-support 30 de matière plastique, montrée plus en détail sur la figure 1.

Sur ladite feuille-support 30 est montée selon la technologie "puce retournée" (flip chip) une pastille semi-conductrice 20 préalablement munie de protubérances 211, 221 prévues pour venir en contact avec les bornes 11, 12 de connexion de l'antenne 10.

L'antenne 10 de couplage peut être réalisée selon plusieurs techniques, telles que l'impression ou la gravure. Toutefois il y a avantage, pour des raisons de coût et de simplicité de mise en oeuvre, à ce que l'antenne soit sérigraphiée avec une encre conductrice, sans dépôt métallique, ou autre, préalable. Bien entendu, la technologie "offset" peut également être utilisée. On obtient ainsi des antennes avec des facteurs de qualité certes inférieurs qu'avec des antennes imprimées ou gravées, mais tout à fait compatibles avec l'application carte sans contact.

Dans le cas où les protubérances 211, 221 de la pastille semi-conductrice 20 sont métalliques (or, cuivre, aluminium, étain, etc...), les bornes 11, 12 de connexion sont métalliques, à savoir soit métallisées, or par exemple, la pastille 20 étant ensuite montée par thermo-compression, soit étamées avec report de pâte à braser et montage de la pastille par soudure. Dans les deux cas, l'antenne 10 de couplage doit être métallique.

Cependant, les techniques de thermo-compression et de soudure ne permettent pas l'utilisation de circuits imprimés en matières plastiques de faible coût, telles que le PVC, l'ABS et le polyester en raison des températures et des pressions requises. Certains plastiques un peu plus chers, polyimides par exemple, peuvent supporter la thermo-compression, mais dans des épaisseurs souvent incompatibles avec la réalisation de cartes à mémoire électronique aux normes ISO. D'autre part, les plastiques supportant les hautes températures sont très difficiles à replastifier par injection et a fortiori par laminage. Cette dernière technique exige alors l'emploi d'adhésifs très onéreux pour une tenue mécanique de mauvaise qualité (délaminage, faible élasticité).

C'est pourquoi, il est préférable que la pastille semi-conductrice 20 à contact par protubérances 211, 221 soit montée sur les bornes 11, 12 de connexion électriques de l'antenne de couplage au moyen d'une colle conductrice. Les bornes 11, 12 de connexion électrique sont enduites de colle ou d'encre conductrice, par sérigraphie par exemple. La pastille 20 est alors rapportée, puis la colle est polymérisée à chaud. Les températures requises pour ces colles sont compatibles avec la tenue en température des matières plastiques.

Ce procédé de report par colle conductrice présente de nombreux avantages :
― il est très économique,
― on peut utiliser n'importe quelle matière plastique, même celles ayant de faibles tenues en température et en pression,
― le problème de compatibilité entre la matière plastique de la feuille-support 30 de l'antenne 10 et de la matière plastique de la carte ne se pose plus,
― l'antenne de couplage n'a pas besoin d'être métallique et peut être réalisée dans un matériau conducteur non métallique, comme le carbone ou l'encre conductrice, par exemple.

Les protubérances 211, 221 seront de préférence réalisées avec des polymères conducteurs de l'électricité qui, dans l'application aux cartes à mémoire électronique, offrent d'un point de vue mécanique un meilleur découplage de la pastille semi-conductrice par rapport au corps de la carte. Naturellement, pour être compatibles avec le procédé, les métallisations 21, 22 d'entrée/sortie des pastilles doivent être faites avec un métal inoxydable ou bien un métal dont l'oxyde est conducteur de l'électricité : or, titane/tungstène, argent, cuivre.

Plusieurs variantes sont à envisager selon la nature du polymère conducteur formant les protubérances :
a) le polymère est une résine époxy chargée argent qui sera polymérisée après sérigraphie,
b) le polymère est une résine époxy chargée argent réactivable, séchée après sérigraphie, et qui sera polymérisée après assemblage du circuit intégré sur le substrat isolant du module,
c) le polymère est un thermoplastique chargé argent.

Comme l'indique la figure 2, la pastille semi-conductrice 20 à contact par protubérances 211, 221 peut être montée à cheval sur l'antenne 10 de couplage. On évite ainsi d'utiliser un circuit double face très cher.

Après réalisation de l'antenne 10 sur la feuille-support 30 et montage de la pastille semi-conductrice 20, le procédé de l'invention prévoit, conformément à la figure 3, de placer sur ladite feuille-support 30 constituant le circuit électronique 1 une feuille intermédiaire 31 de matière plastique, sans ouverture, destinée à recouvrir ladite pastille semi-conductrice. Puis, une feuille externe 33 de matière plastique est placée sur ladite feuille intermédiaire 31. Enfin, l'ensemble des feuilles 30, 31, 33 est assemblé par colaminage à chaud, par exemple, pour réaliser la carte sur laquelle il apparaît que la pastille semi-conductrice 20 conforme elle-même une cavité dans l'épaisseur de la feuille intermédiaire 31 sans pour autant que ne se crée une surépaisseur notable au niveau de la feuille externe 33. Ce n'est toutefois pas le cas général. En effet, la feuille intermédiaire 31 dans laquelle vient s'insérer la puce a un point de ramollissement plus bas que celui des autres feuilles ou feuillets assemblés par colaminage à chaud.

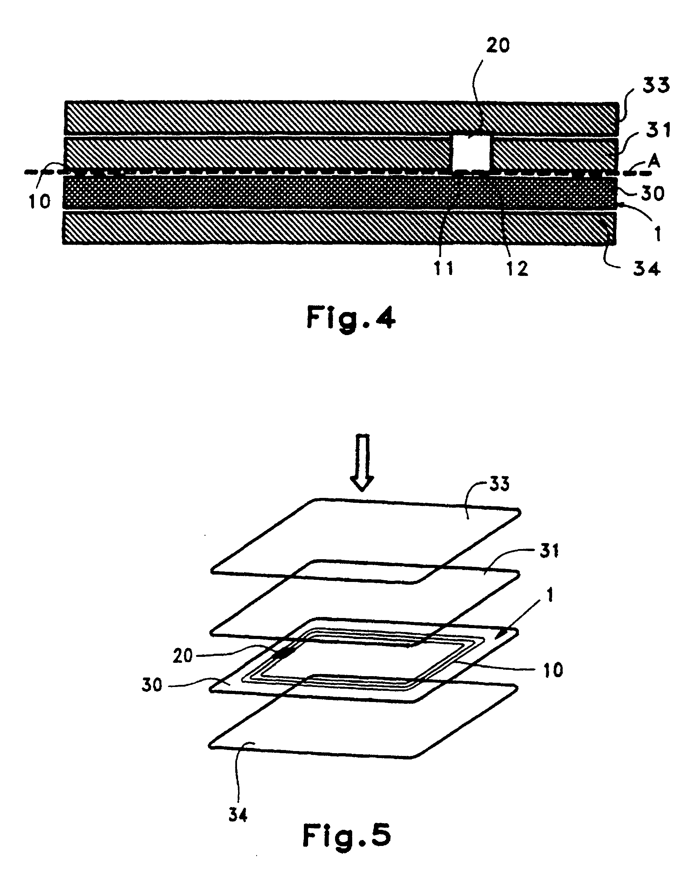

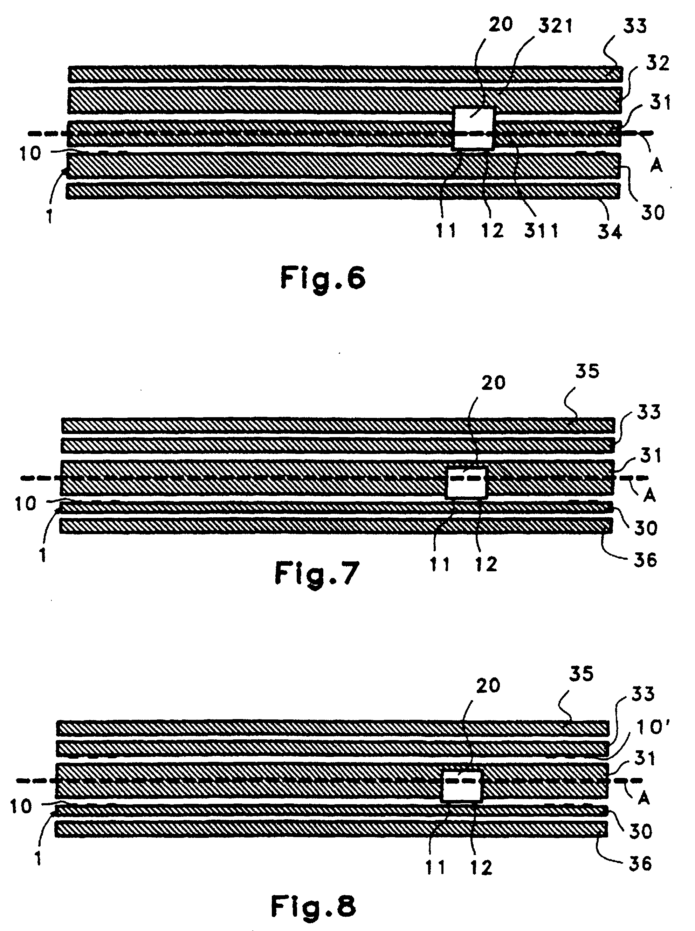

Bien entendu, l'assemblage des feuilles pourrait être également réalisé par d'autres techniques, comme le collage.On obtient ainsi une structure homogène et symétrique dont le plan de symétrie est référencé A sur la figure 3. Les avantages de cette structure sont les suivants :
― l'encombrement de la pastille semi-conductrice 20 esttrès faible comparé à celui d'un module électronique,―comme l'insert est d'épaisseur très faible, on peut réaliser des structures où les feuilles externes sont relativement épaisses, ce qui permet d'imprimer les faces extérieures des cartes sans difficulté et avec de très bons rendements,
― comme le montrent les figures 7 et 8, on peut placer des feuilles 35, 36 de couverture (overlays en anglo-saxon) sur les faces extérieures de la structure formée par l'ensemble des feuilles de matière plastique. De tels overlays peuvent être ajoutés sur une carte du type de celle présentée à la figure 4.
― le procédé permet la réalisation de planches sur lesquelles on peut déposer des pistes magnétiques avec de très bons rendements.

L'exemple de réalisation de la figure 3 correspond au cas où l'impression des faces extérieures est effectuée après laminage à chaud. Par contre, si l'on veut par exemple imprimer la carte avant l'opération de laminage, une deuxième feuille externe préimprimée 34 est placée contre la feuille-support 30, à l'opposé de la feuille intermédiaire 31, la première feuille externe 33 étant également préimprimée. Cela est montré aux figures 4 et 5.La figure 6 montre qu'au besoin il est possible de placer une deuxième feuille intermédiaire 32. Dans ce cas, afin de symétriser la structure, une deuxième feuille externe 34 est avantageusement placée sur la feuille-support 30.

Toujours dans le souci de donner à la carte la structure la plus symétrique possible, on peut, conformément à la figure 8, réaliser un enroulement 10', semblable à l'antenne 10, sur la feuille 33 symétrique de la feuille-support 30 par rapport à la feuille intermédiaire 31 contiguë à la feuille support 30.

On peut ainsi réaliser des antennes à fort volume métallique sans risquer que les cartes ne se galbent.

Dans un exemple de mise en oeuvre de l'invention, la feuille 30 sur laquelle repose la pucc, dont l'épaisseur est de l'ordre de 200 µm, est en PVC. Cette feuille 30 présente une température de ramollissement de l'ordre de 82 °C (point Vicat). Cette température est bien supérieure à la température de ramollissement de la feuille 31, également en PVC, dans laquelle va s'insérer la puce. En effet, la température de ramollissement de cette feuille 31 est de l'ordre de 65 °C.

Deux feuilles dites externes sont appliquées l'une, sur la face supérieure de la feuille 30 et l'autre, sur la face inférieure de la feuille 31. Ces feuilles externes, dont l'épaisseur est de l'ordre de 50 µm, sont en polycarbonate et leur température de ramollissement (point Vicat) est de l'ordre de 140 °C. Ainsi, la température du colaminage étant réglée de manière que seule la feuille 31 atteigne sa température de ramollissement, toutes les feuilles restent sensiblement intactes à l'exception de ladite feuille 31 dans laquelle vient s'insérer la puce. Deux couches de revêtement fines (overlays), d'une épaisseur de l'ordre de 50 µm, sont alors placées de manière à recouvrir l'ensemble des feuilles assemblées. Ces deux couches de revêtement fines sont en général thermodurcissables.

Ainsi, par rapport à l'état de la technique constitué par le document brevet EP-A-0 706 152, l'invention permet de cumuler les avantages du flip-chip avec un laminage à chaud de matériaux à points de ramollissement différents en supprimant la découpe de cavité dans les feuillets intermédiaires, en supprimant l'alignement des cavités avec la puce et en ne nécessitant pas d'injection de résine. La puce est parfaitement insérée dans le volume de plastique. Les contraintes en torsion et flexion sont égalisées, ce qui permet un bonne tenue mécanique de l'ensemble.

En effet, lorsque la feuille intermédiaire ne comporte pas de cavité préalable dans laquelle est insérée la puce, l'insertion de ladite puce, lors du colaminage, dans la feuille ramollie, s'effectue de telle manière que la puce est bien maintenue par ses bords en contact avec la feuille. Les contraintes en torsion et en flexion seront ainsi transmises, par lesdits bords, dans la carte, de manière équilibrée. Le fait que la puce soit, dans l'invention, avantageusement placée le long de la fibre neutre, c'est-à-dire dans le plan A où les contraintes sont minimales, prend alors toute son importance.

On notera d'ailleurs que le système est encore amélioré si les deux feuilles externes ont des points de ramollissement plus hauts que les feuillets internes.

## Revendications

1. Procédé de réalisation d'une carte à mémoire électronique apte à échanger, sans contact électrique, des informations avec un dispositif de lecture, ladite carte à mémoire électronique comportant une antenne (10) de couplage avec ledit dispositif de lecture et une pastille semi-conductrice (20) connectée à ladite antenne (10), **caractérisé en ce que** ledit procédé comprend les étapes consistant d'une part à :
a) réaliser sur une feuille-support (30) de matière plastique une antenne (10) de couplage munie de deux bornes (11, 12) de connexion électrique,
b) monter sur lesdites bornes (11, 12) de connexion électrique une pastille semi-conductrice (20) à contact par protubérances (211, 221),
puis à :
c) placer sur la feuille support (30) ainsi équipée, constituant ledit circuit électronique (1), une feuille intermédiaire (31) de matière plastique destinée à recouvrir ladite pastille semi-conductrice (20), la température de ramollissemnet de la matière plastique de ladite feuille intermédiaire (31) étant inférieure à la température de ramollissement de la matière plastique de la feuille support (30),
d) placer une feuille externe (33, 34) de matière plastique au moins sur ladite feuille intermédiaire (31),
e) laminer à chaud l'ensemble desdites feuilles, la température du colaminage étant réglée de manière que seule la feuille intermédiaire (31) atteigne sa température de ramollissement afin que toutes les feuilles restent sensiblement intactes à l'exception de la feuille intermédiaire (31) dans laquelle s'insère la pastille semi-conductrice (20).

2. Procédé selon la revendication 1, **caractérisé en ce que** la pastille semi-conductrice (20) à contact par protubérance (211, 221) est montée à cheval sur l'antenne (10) de couplage.

3. Procédé selon l'une des revendications 1 ou 2, **caractérisé en ce que** ladite pastille semi-conductrice (20) à contact par protubérances (211, 221) est montée sur les bornes (11, 12) de connexion électrique de l'antenne (10) de couplage au moyen d'une colle conductrice.

4. Procédé selon l'une quelconque des revendications 1 à 3, **caractérisé en ce que** l'antenne de couplage est réalisée au moyen d'une encre conductrice, par sérigraphie ou offset.

5. Procédé selon l'une quelconque des revendications 1 à 4, **caractérisé en ce que** l'antenne (10) de couplage est réalisée en un matériau conducteur non métallique, y compris le carbone.

6. Procédé selon l'une quelconque des revendications 1 à 5, **caractérisé en ce que** les protubérances (211, 221) de la pastille semi-conductrice (20) sont réalisées en polymère conducteur.

7. Procédé selon l'une des revendications 1 à 6, **caractérisé en ce que** les étapes c) et d) consistent à placer deux feuilles intermédiaires (31, 32) sur la feuille support (30) et à placer une feuille externe (33, 34), d'une part, sur les feuilles intermédiaires (31, 32), et, d'autre part, sur la feuille support (30).

8. Procédé selon l'une quelconque des revendications 1 à 7, **caractérisé en ce que**, après l'étape d) une feuille (35, 36) de couverture est placée sur chaque face extérieure de l'ensemble desdites feuilles.

9. Procédé selon l'une quelconque des revendications 1 à 8, **caractérisé en ce que** la feuille intermédiaire (31) est réalisée dans une même matière plastique, dont la température de ramollissement est plus basse que la température de ramollissement des autres feuilles.

10. Procédé selon l'une quelconque des revendications 1 à 9, **caractérisé en ce qu'**un enroulement (10') semblable à l'antenne (10) de couplage est réalisé sur la feuille symétrique (33) de la feuille-support (30) par rapport à la feuille intermédiaire (31) contiguë à la feuille support (30).

## Claims

1. Method to produce an electronic memory card capable of exchanging, with no electrical contact, information with a reading device, said electronic memory card including an antenna (10) for coupling with said reading device and a semiconductor chip (20) connected to said antenna (10), **characterised in that** said method comprises the steps consisting of:
a) producing on a plastic support sheet (30) a coupling antenna (10) equipped with two electrical connection terminals (11, 12),
b) mounting on said electrical connection terminals (11, 12) a semiconductor flip chip (20) with contact bumps (211, 221),
then of:
c) placing on the support sheet (30) so equipped, forming said electronic circuit (1), a plastic intermediate sheet (31) designed to cover said semiconductor chip (20), the softening temperature of the plastic of said intermediate sheet (31) being less than the softening temperature of the plastic of the support sheet (30),
d) placing a plastic external sheet (33, 34) at least on said intermediate sheet (31),
e) hot laminating all said sheets, the colaminating temperature being set so that only the intermediate sheet (31) reaches its softening temperature so that all sheets remain substantially intact apart from the intermediate sheet (31) in which the semiconductor chip (20) is inserted.

2. Method according to claim 1, **characterised in that** the semiconductor flip chip (20) with contact bumps (211, 221) is mounted across the coupling antenna (10).

3. Method according to claim 1 or 2, **characterised in that** said semiconductor flip chip (20) with contact bumps (211, 221) is assembled on the electrical connection terminals (11, 12) of the coupling antenna (10) using a conducting adhesive.

4. Method according to any of claims 1 to 3, **characterised in that** the coupling antenna is produced using a conducting ink, by serigraphy or offset.

5. Method according to any of claims 1 to 4, **characterised in that** the coupling antenna (10) is made from a non metallic conducting material, including carbon.

6. Method according to any of claims 1 to 5, **characterised in that** the contact bumps (211, 221) of the semiconductor chip (20) are made from a conducting polymer.

7. Method according to any of claims 1 to 6, **characterised in that** steps c) and d) consist of placing two intermediate sheets (31, 32) on the support sheet (30) and of placing an outer sheet (33, 34) on the intermediate sheets (31, 32) and also on the support sheet (30).

8. Method according to any of claims 1 to 7, **characterised in that** after step d), a cover sheet (35, 36) is placed on each outer side of set of said sheets.

9. Method according to any of claims 1 to 8, **characterised in that** the intermediate sheet (31) is made from the same plastic, whose softening temperature is lower than the softening temperature of the other sheets.

10. Method according to any of claims 1 to 9, **characterised in that** a winding (10') similar to the coupling antenna (10) is produced on sheet (33) symmetrically opposite the support sheet (30) with respect to the intermediate sheet (31) next to the support sheet (30).

## Patentansprüche

1. Herstellungsverfahren einer elektronischen Speicherkarte, die ohne elektrischen Kontakt zum Austausch von Informationen mit einer Lesevorrichtung fähig ist, wobei die besagte elektronische Speicherkarte eine Antenne (10) zur Koppelung mit der besagten Lesevorrichtung und ein an der besagten Antenne (10) angeschlossenes Halbleiterplättchen (20) umfasst, **dadurch gekennzeichnet, dass** das besagte Verfahren folgende Schritte umfasst, die zum einen darin bestehen, dass:
a) auf einer Trägerschicht (30) aus Kunststoff eine mit zwei elektrischen Anschlussklemmen (11, 12) versehene Koppelantenne (10) hergestellt wird,
b) auf den besagten elektrischen Anschlussklemmen (11, 12) ein Halbleiterplättchen (20) mit Protuberanzkontakten (211, 221) montiert wird,
und dass:
c) auf die so bestückte und den besagten elektronischen Schaltkreis (1) bildende Trägerschicht (30) eine Zwischenschicht (31) aus Kunststoff zum Abdecken des besagten Halbleiterplättchens (20) angeordnet wird, wobei die Erweichungstemperatur des Kunststoffes der besagten Zwischenschicht (31) niedriger ist als die Erweichungstemperatur des Kunststoffes der Trägerschicht (30),
d) eine äußere Schicht (33, 34) aus Kunststoff zumindest auf der besagten Zwischenschicht (31) angeordnet wird,
e) alle besagten Schichten warmgewalzt werden, wobei die Walztemperatur so eingestellt ist, dass nur die Zwischenschicht (31) ihre Erweichungstemperatur erreicht und alle Schichten mit Ausnahme der Zwischenschicht (31), in der das Halbleiterplättchen (20) eingesetzt wird, wesentlich intakt bleiben.

2. Verfahren nach Anspruch 1, **dadurch gekennzeichnet, dass** das Halbleiterplättchen (20) mit Protuberanzkontakten (211, 221) auf die Koppelantenne (10) übergreifend montiert ist.

3. Verfahren nach einem der Ansprüche 1 oder 2, **dadurch gekennzeichnet, dass** das besagte Halbleiterplättchen (20) mit Protuberanzkontakten (211, 221) an den elektrischen Anschlussklemmen (11, 12) der Koppelantenne (10) mittels einem leitfähigen Kleber montiert wird.

4. Verfahren nach einem der Ansprüche 1 bis 3, **dadurch gekennzeichnet, dass** die Koppelantenne mittels einer leitfähigen Tinte durch Siebdruck oder Offset hergestellt wird.

5. Verfahren nach einem der Ansprüche 1 bis 4, **dadurch gekennzeichnet, dass** die Koppelantenne (10) aus einem nichtmetallischen leitfähigen Material, inklusive Kohlenstoff, hergestellt wird.

6. Verfahren nach einem der Ansprüche 1 bis 5, **dadurch gekennzeichnet, dass** die Protuberanzen (211, 221) des Halbleiterplättchens (20) aus einem leitfähigen Polymer hergestellt sind.

7. Verfahren nach einem der Ansprüche 1 bis 6, **dadurch gekennzeichnet, dass** die Schritte c) und d) darin bestehen, dass auf der Trägerschicht (30) zwei Zwischenschichten (31, 32) angeordnet werden und dass eine äußere Schicht (33, 34) einerseits auf den Zwischenschichten (31, 32) und andererseits auf der Trägerschicht (30) angeordnet wird.

8. Verfahren nach einem der Ansprüche 1 bis 7, **dadurch gekennzeichnet, dass** nach dem Schritt d) eine Deckschicht (35, 36) auf jede Außenseite der ganzen besagten Schichten angeordnet wird.

9. Verfahren nach einem der Ansprüche 1 bis 8, **dadurch gekennzeichnet, dass** die Zwischenschicht (31) aus einem einzigen Kunststoff hergestellt wird, dessen Erweichungstemperatur niedriger als die Erweichungstemperatur der anderen Schichten ist.

10. Verfahren nach einem der Ansprüche 1 bis 9, **dadurch gekennzeichnet, dass** auf der zur Trägerschicht (30) symmetrischen Schicht (33) in Bezug auf die Zwischenschicht (31) angrenzend an die Trägerschicht (30) ein der Koppelantenne (10) ähnliches Aufrollen (10') erfolgt.
